Europäisches Patentamt

European Patent Office

Office européen des brevets

(11) Numéro de publication: **0 007 082**
**A1**

## DEMANDE DE BREVET EUROPEEN

(21) Numéro de dépôt: **79102317.9**

(22) Date de dépôt: **09.07.79**

(51) Int. Cl.³: **B 60 R 7/04**

(30) Priorité: **14.07.78 ES 237317**

(43) Date de publication de la demande:
**23.01.80 Bulletin 80/2**

(84) Etats Contractants Désignés:
**BE CH DE FR GB IT LU NL SE**

(71) Demandeur: **Gomez, Pedro Martin**
**C/Batalla del Salado no 30-20 G.**
**Madrid 7(ES)**

(72) Inventeur: **Gomez, Pedro Martin**
**C/Batalla del Salado no 30-20 G.**
**Madrid 7(ES)**

(74) Mandataire: **Weinmiller, Jürgen et al,**
**Zeppelinstrasse 63**
**D-8000 München 80(DE)**

(54) Support pour boîtes de mouchoirs en papier pour son montage dans des véhicules automobiles.

(57) Support pour boîte de mouchoirs en papier composé d'un cadre (1) définissant un contour en U de profil rectangulaire, les dimensions de ce contour étant sensiblement égales à celles de la base de la boîte. Contre les branches parallèles du U est articulée en plaque transversale (4) de fermeture située à une distance de la base du U égale à la longueur de la boîte.

FIG. 1

EP 0 007 082 A1

Croydon Printing Company Ltd

## Support pour boîtes de mouchoirs en papier pour son montage dans des véhicules automobiles

La présente invention se réfère à un support pour boîtes de mouchoirs en papier pour son montage dans des véhicules automobiles, dessiné de telle façon qu'il puisse être placé dans un endroit du véhicule facilement accessible sans supposer aucun obstacle pour les usagers dudit véhicule.

L'emploi de mouchoirs ou serviettes en cellulose est de plus en plus fréquent parmi les automobilistes, en raison de la diversité des applications de tels mouchoirs. Ces mouchoirs sont commercialisés dans des boîtes aux dimensions standardisées qui sont généralement placées dans la boîte à gants ou dans n'importe quelle partie du véhicule où elles ne sont pas facilement accessibles pour le conducteur. Ceci suppose une grande incommodité et même un risque parce que l'attention du conducteur peut être détournée si elle est dirigée vers la localisation de la boîte et l'extraction du mouchoir.

D'autre part, comme la boîte de mouchoirs se trouve généralement dans le véhicule sans attaches, elle arrive même à se déchirer avant que son contenu ne soit épuisé.

Le but de la présente invention est d'obtenir un support bon marché pour ces boîtes de mouchoirs en papier, ledit support pouvant être facilement fixé à l'intérieur du véhicule à un endroit où les mouchoirs sont parfaitement accessibles pour le conducteur.

Un autre but de l'invention est d'obtenir un support pour le but indiqué, lequel peut être fixé sur n'importe quelle surface interne du véhicule, spécialement pour qu'il soit retenu par n'importe lequel des accessoires fixés sur de telles surfaces, de façon à ce qu'il ne soit pas nécessaire d'effectuer une transformation ou opération nouvelle dans le véhicule.

La présente invention a donc pour objet un support

pour boîtes de mouchoirs en papier pour son montage dans des véhicules automobiles, caractérisé en ce qu'il comprend un cadre 1 qui définit un contour en U de forme rectangulaire, de largeur environ égale à celle de la boîte ou emballage de mouchoirs et de longueur légèrement supérieure à ladite boîte, entre les branches duquel est articulée une plaque transversale de fermeture 4 située à une distance de la base du U égale à la longueur de la boîte ou emballage, les côtés du cadre 1 étant constitués par un profil angulaire, dont une des ailes 2 est coplanaire sur les trois côtés, pour servir d'appui à la boîte ou emballage, tandis que l'autre aile 3 sert de butoir latéral de ladite boîte, la plaque de fermeture ayant une largeur au moins égale à la hauteur de la boîte ou emballage et étant liée aux branches parallèles du cadre par des pivots latéraux 5 situés face à face en prolongement du grand côté inférieur et par deux ressorts de traction 6 reliés d'une part à ladite plaque près de ses sommets supérieurs et d'autre part aux branches parallèles du cadre en des points intermédiaires des ailes qui servent de butoirs latéraux sur lesdites branches, la plaque transversale se prolongeant en outre à partir de son plus grand bord libre, d'une languette centrale 7 pour sa fixation à une surface du véhicule, spécialement pour sa retenue par un accessoire fixé sur de telles surfaces.

La fixation du support sera faite de préférence dans le toit du véhicule en introduisant la languette susmentionnée entre la surface interne du véhicule et le support du rétroviseur. La boîte de mouchoirs sera placée, une fois ouverte, dans une position renservée, et ainsi l'ouverture d'extraction des mouchoirs est dirigée vers le bas, parfaitement accessible, tandis que le cadre en U est poussé vers le toit retenant parfaitement la boîte de mouchoirs.

La constitution décrite sera comprise plus facilement avec la description suivante faite en se référant aux dessins ci-joints, dans lesquels est montrée une forme préférée d'exécution donnée à titre d'exemple non limitatif :

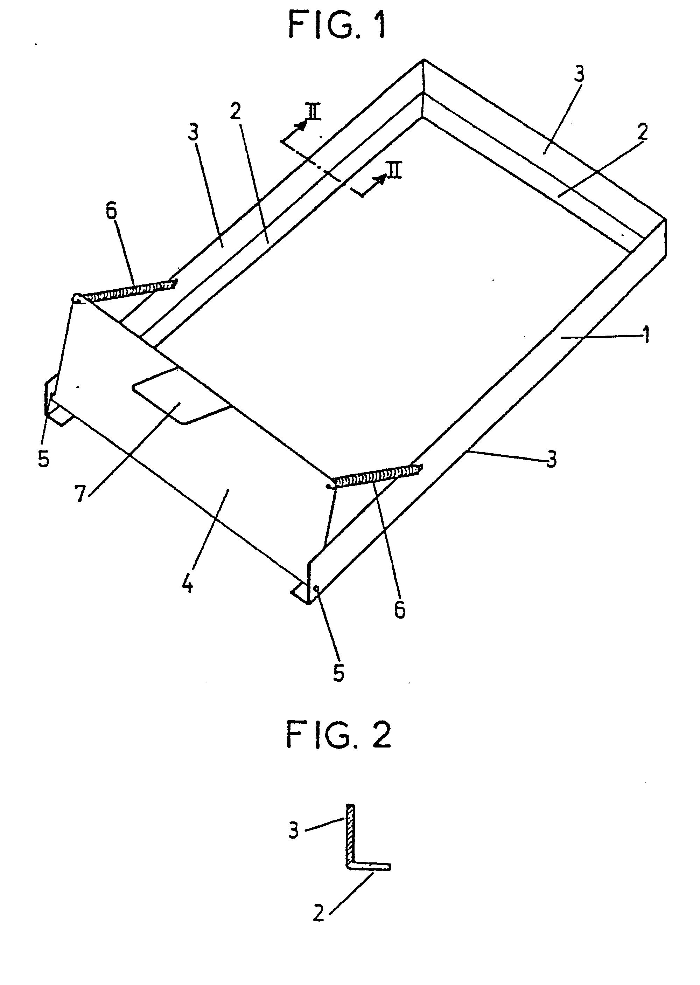

- la figure 1 étant une perspective supérieure du support,
- la figure 2 une section par la ligne II-II de la figure 1.

Comme on peut le voir dans les dessins, le support est constitué par un cadre 1 en U à partir d'un profil angulaire, dont l'une des ailes 2 est coplanaire sur les trois branches du U, tandis que l'autre aile 3 est dirigée perpendiculairement à l'aile 2.

Le cadre 1 en forme de U est fermé par une plaque transversale 4 de forme rectangulaire, qui présente à partir de ses plus petits côtés et comme prolongation de l'un des plus grands côtés, deux pivots 5 qui sont introduits par des orifices mis face à face percés dans les ailes 3 des branches parallèles, agissant comme axe d'articulation de ladite plaque 4. De plus, la plaque 4 est reliée aux branches parallèles au moyen de ressorts de traction 6.

Le cadre 1 en forme de U est de dimension environ égale à la boîte de mouchoirs, laquelle reste en position renversée appuyée sur les ailes 2 et retenue latéralement par les ailes 3 et la plaque transversale de fermeture 4.

La fixation du support au véhicule se réalise au moyen d'une languette 7 qui s'avance à partir du bord supérieur libre de la plaque 4. Cette languette s'introduit de préférence entre le toit du véhicule et le support du rétroviseur fixé au toit.

De cette façon, le cadre 1, sous l'effet des ressorts 6, est poussé vers le toit retenant parfaitement la boîte de mouchoirs. Ladite boîte restant en position renversée, l'ouverture d'extraction des mouchoirs est parfaitement accessible pour le conducteur entre les branches du cadre en U, sans que le support ni la boîte retenue par celui-ci supposent un quelconque obstacle à l'intérieur du véhicule.

Enfin, la languette 7 pourrait être munie d'un orifice pour la fixation de l'ensemble moyennant une vis, un rivet ou similaire.

- 4 -

REVENDICATION

Support pour boîtes de mouchoirs en papier pour son montage dans des véhicules automobiles, caractérisé en ce qu'il comprend un cadre (1) qui définit un contour en U de forme rectangulaire, de largeur environ égale à celle de la boîte ou emballage de mouchoirs et de longueur légèrement supérieure à ladite boîte, entre les branches duquel est articulée une plaque transversale de fermeture (4) située à une distance de la base du U égale à la longueur de la boîte ou emballage, les côtés du cadre (1) étant constitués par un profil angulaire, dont une des ailes (2) est coplanaire sur les trois côtés, pour servir d'appui à la boîte ou emballage, tandis que l'autre aile (3) sert de butoir latéral de ladite boîte, la plaque de fermeture ayant une largeur au moins égale à la hauteur de la boîte ou emballage et étant liée aux branches parallèles du cadre par des pivots latéraux (5) situés face à face en prolongement du grand côté inférieur et par deux ressorts de traction (6) reliés d'une part à ladite plaque près de ses sommets supérieurs et d'autre part aux branches parallèles du cadre en des points intermédiaires des ailes qui servent de butoirs latéraux sur lesdites branches, la plaque transversale se prolongeant en outre à partir de son plus grand bord libre, d'une languette centrale (7) pour sa fixation à une surface du véhicule, spécialement pour sa retenue par un accessoire fixé sur de telles surfaces.

0007082

## FIG. 1

## FIG. 2

Office européen
des brevets

**RAPPORT DE RECHERCHE EUROPEENNE**

Numéro de la demande

EP 79 102 317.9

| | DOCUMENTS CONSIDERES COMME PERTINENTS | | CLASSEMENT DE LA DEMANDE (Int. Cl.3) |
|---|---|---|---|
| Catégorie | Citation du document avec indication, en cas de besoin, des parties pertinentes | Revendica-tion concernée | |
| | US - A - 3 827 664 (LARSON) <br> * fig. 1 et 2 * <br> --- | 1 | B 60 R 7/04 |
| | US - A - 3 292 889 (J.L. ROLL) <br> * fig. 2 et 3 * <br> -- | 1 | |
| | US - A - 3 288 416 (V.L. FRANKLIN) <br> * fig. 1 et 3 * <br> --- | 1 | **DOMAINES TECHNIQUES RECHERCHES (Int. Cl.3)** |
| | US - A - 3 284 041 (O.G. TJADEN) <br> * fig. 1 et 2 * <br> -- | 1 | B 60 R 7/00 |
| | US - A - 2 836 386 (N.J. IVERSON) <br> * fig. 1 et 2 * <br> -- | 1 | |
| | US - A - 2 626 119 (C.L. CROSBY) <br> * fig. 1 * <br> -- | 1 | |
| | US - A - 2 300 692 (C.B. OLSEN) <br> * fig. 1 et 2 * <br> -- <br> ./.. | 1 | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| Berlin | 28-09-1979 | BECKER |

OEB Form 1503.1 06.78

0007082

| | | Numéro de la demande |

**RAPPORT DE RECHERCHE EUROPEENNE**

Office européen des brevets

EP 79 102 317.9
- page 2 -

## DOCUMENTS CONSIDERES COMME PERTINENTS

| Catégorie | Citation du document avec indication, en cas de besoin, des parties pertinentes | Revendication concernée |
|---|---|---|
| | US - A - 2 278 011 (F.L. MURDOCK)<br>* fig. 3 *<br><br>--<br><br>US - A - 2 256 204 (C.M. JAMESON)<br>* fig. 3 *<br><br>--<br><br>US - A - 3 214 059 (D.D. STARK)<br>* fig. 2 et 3 *<br><br>---- | 1<br><br><br><br>1 |

CLASSEMENT DE LA DEMANDE (Int. Cl.³)

DOMAINES TECHNIQUES RECHERCHES (Int. Cl.³)

OEB Form 1503.2   06.78